# EUROPEAN PATENT APPLICATION

(11) **EP 2 637 392 A2**
(43) Date of publication of application: **11.09.2013**
(21) Application number: 13000900.4
(22) Date of filing: 22.02.2013
(51) Int. Cl.: H04M 1/725

(54) **Electronic device and method of controlling the same**

(30) Priority: 05.03.2012 KR 20120022131
(71) Applicant: LG Electronics, Inc., Seoul, 150-721 (KR)
(72) Inventor: Ryu, Jaekyung, Seoul 153-801 (KR); Park, Booil, Seoul 153-801 (KR); Yi, Kyueun, Seoul 153-801 (KR); Choi, Kwontaeg, Seoul 153-801 (KR); Kim, Jesung, Seoul 153-801 (KR); Kim, Hyunwoo, Seoul 153-801 (KR); Jang, Sungbong, Seoul 153-801 (KR); Jung, Sungon, Seoul 153-801 (KR)
(74) Representative: Ter Meer Steinmeister & Partner

(57) **Abstract**

The present invention relates to an electronic device and a method of controlling the electronic device. The present invention provides an electronic device that provides various user interfaces to effectively alert a user that an edge of information is reached while scrolling through the information and a method of controlling the electronic device. For example, according to the present invention, the user is effectively alerted that the edge is reached, because the depth level, at which the page is displayed, is changed, when the edge of the information is reached during the scrolling of the information.

## Description

### CROSS-REFERENCE TO RELATED APPLICATIONS

This application claims the benefit of earlier filing date and right of priority to Korean Patent Application No.10-2012-0022131, filed on 05 March, 2012, the contents of which are incorporated by reference herein in their entirety.

### TECHNICAL FIELD

The present invention relates to an electronic device, and particularly to an electronic device that provides various user interfaces to effectively alert a user that an edge of information is reached during scrolling, and a method of controlling the electronic device.

### DISCUSSION OF THE RELATED ART

Considerable advancements in various electronic devices including mobile terminals and the related hardware and software technologies have enabled a user to get speedy access to a variety of items of information using the electronic device.

Accordingly, most of the electronic devices provide a scrolling function, because most of the time the entire information cannot be displayed on one screen. Therefore, developments of various user interfaces are required to provide a solution for effectively alerting the user that an edge of the information is reached while scrolling through the information using the scrolling function.

### SUMMARY

An object of the present invention is to provide an electronic device that provides various user interfaces to effectively alert a user that an edge of information is reached during scrolling and a method of controlling the electronic device.

According to an aspect of the present inventions, there is provided an electronic device including a touch screen on which to display information, and a controller that scrolls through the information in a specific direction when receiving a scrolling command corresponding to the specific direction via the touch screen, and controls displaying of a page in such a manner that when an edge of the information is reached while scrolling through the information in the specific direction according to the received scrolling command, a depth level, at which at least one part of the page displayed on the touch screen is initially, is changed.

According to another aspect of the present inventions, there is provided a method of controlling an electronic device including a touch screen, the method including displaying information on the touch screen, scrolling through the information in a specific direction when receiving a scrolling command corresponding to the specific direction via the touch screen, and controlling displaying of the page in such a manner that when an edge of the information is reached while scrolling through the information in the specific direction according to the received scrolling command, a depth level, at which at least one part of the page displayed on the touch screen is initially, is changed.

The electronic device and the method of controlling the electronic device according to the present invention may effectively alert the user that the edge of the information is reached while scrolling through the information, providing the user with a new visual effect.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.

FIG. 1 is a block diagram of a mobile terminal according to an embodiment;

Fig. 2 is a conceptual diagram for describing a proximity depth of a proximity sensor.

Fig. 3 is a flow chart of a method of controlling an electronic device according to a first embodiment of the present invention.

Fig. 4 illustrates an example in which specific information is displayed on the touch screen.

Fig. 5 is a diagram for describing a scroll bar.

Fig. 6 is a diagram illustrating an example in which the information is scrolled through on the touch screen.

Fig. 7 is a diagram illustrating an example in which an edge of the information is reached while scrolling through the screen.

Figs. 8 to 12 are diagrams, each illustrating a case where a depth level, at which the information is initially, corresponds to a two-dimensional plane, as a first manner in which a controller performs Step S140.

Figs. 13 to 17 are diagrams for describing an example in which displaying of an edge page is controlled in such a manner that the edge page is displayed outwardly on a screen as if it projected out of the screen.

Figs. 18 and 19 are diagrams for describing a case where one part of the edge page is controlled in such a manner as to change the depth level at which one part of the edge page is initially.

Figs. 20 and 21 are diagrams for describing a method of displaying a stereoscopic image using binocular disparity, which relates to embodiments according to the present invention.

Fig. 22 is a conceptional diagram illustrating a lateral side of the electronic device to describe a case where the stereoscopic image is displayed via the touch screen.

Fig. 23 is a diagram illustrating a case where the embodiments illustrated in Figs. 8 and 9 are applied to the stereoscopic image.

Fig. 24 is a diagram illustrating a case where the embodiments illustrated in Figs. 15 to 17 are applied to the stereoscopic image.

Figs. 25 and 26 are diagrams for describing a case where one part of the scroll bar including an area in which the information is scrolled through is controlled according to the embodiment of the present invention.

Fig. 27 is a flow chart of a method of controlling an electronic device according to a second embodiment of the present invention.

Figs. 28 and 29 are diagrams for describing the method of controlling the electronic device according to the second embodiment of the present invention.

Fig. 30 is a flow chart of a method of controlling the electronic device according to a third embodiment of the present invention.

Figs. 31 to 35 are diagrams for describing the method of controlling the electronic device according to the third embodiment of the present invention.

Fig. 36 is a flow chart of a method of controlling the electronic device according to a fourth embodiment of the present invention.

Fig 37 is a diagram for describing a method of controlling the electronic device according to a fourth embodiment of the present invention.

Fig. 38 is a flow chart of a method of controlling the electronic device according to a fifth embodiment of the present invention.

Fig 39 is a diagram for describing a method of controlling the electronic device according to a fifth embodiment of the present invention.

Fig. 40 is a flow chart of a method of controlling the electronic device according to a sixth embodiment of the present invention.

Fig 41 is a diagram for describing a method of controlling the electronic device according to a sixth embodiment of the present invention.

### DETAILED DESCRIPTION

The present invention will now be described more fully with reference to the accompanying drawings, in which exemplary embodiments of the invention are shown. The invention may, however, be embodied in many different forms and should not be construed as being limited to the embodiments set forth herein; rather, there embodiments are provided so that this disclosure will be thorough and complete, and will fully convey the concept of the invention to those skilled in the art.

Hereinafter, a mobile terminal relating to the present invention will be described below in more detail with reference to the accompanying drawings. In the following description, suffixes "module" and "unit" are given to components of the mobile terminal in consideration of only facilitation of description and do not have meanings or functions discriminated from each other.

The mobile terminal described in the specification can include a cellular phone, a smart phone, a laptop computer, a digital broadcasting terminal, personal digital assistants (PDA), a portable multimedia player (PMP), a navigation system and so on.

The present invention relates to an electronic device, and more particularly to an electronic device and a method of controlling the electronic device, both of which provide a new user interface for selecting, executing and controlling an item displayed on a touch screen.

The present invention, as described below, may be embodied in the electronic device equipped with the touch screen.

According to the present invention, the user interface deriving from the technological idea behind the present invention is provided on the touch screen, when a user touches his/her fingers to an arbitrary area on the touch screen, in a state in which the multiple items is displayed on the touch screen of the electronic device.

The user interface may include a first control area. The multiple colors, which the multiple items displayed on the touch screen correspond to, respectively, corresponds to the first control area. Here, because the user interface is provided, the color corresponding to each of the multiple items may be displayed to show one-to-one correspondence relationship between the multiple items and the multiple colors to the user.

The user may select, execute, and control each of the multiple items through the use of the first control area that the multiple colors correspond to.

For example, when the user drags his/her finger on the first control area that the multiple colors correspond to, in a rubbing manner, the item corresponding to the color displayed on the position across which the finger pass moved may be selected.

Furthermore, the user interface may include a second control area provided in a position different from that of the first control area, which is described below. The second control area may be assigned a function of navigating the multiple items displayed on the touch screen, or may be assigned a function of executing a specific item selected through the use of the first control area, in the same manner as the first control area.

The first control area and the second control area may be used to select, execute, or control the multiple items displayed on the touch screen, through the reciprocal and complementary relationship.

Various embodiments, which are embodied by the user interface including the first control area and the second control area, are described below in detail with reference to the related drawings.

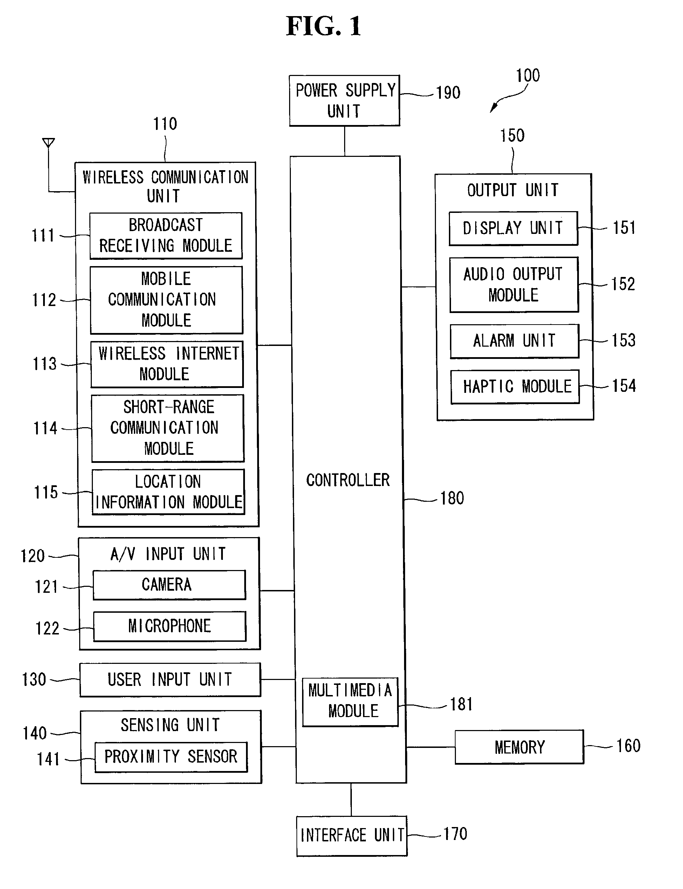

FIG. 1 is a block diagram of a mobile terminal according to an embodiment. Other embodiments, configurations and arrangements may also be provided.

As shown, the mobile terminal 100 may include a wireless communication unit 110 (or radio communication unit), an audio/video (A/V) input unit 120, a user input unit 130, a sensing unit 140, an output unit 150, a memory 160, an interface 170, a controller 180, and a power supply 190. The components shown in FIG. 1 may be essential parts and/or a number of components included in the mobile terminal 100 may vary. Components of the mobile terminal 100 may now be described.

The wireless communication unit 110 may include at least one module that enables radio communication between the mobile terminal 100 and a radio communication system or between the mobile terminal 100 and a network in which the mobile terminal 100 is located. For example, the wireless communication unit 110 may include a broadcasting receiving module 111, a mobile communication module 112, a wireless Internet module 113, a short range communication module 114 (or local area communication module), and a location information module 115 (or position information module).

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The short range communication module 114 may correspond to a module for short range communication. Further, Bluetooth®, radio frequency identification (RFID), infrared data association (IrDA), ultra wideband (UWB) and/or ZigBee® may be used as a short range communication technique.

The location information module 115 may confirm or obtain a location or a position of the mobile terminal 100. The location information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan, for example.

A global positioning system (GPS) module is a representative example of the location information module 115. The GPS module may calculate information on distances between one point or object and at least three satellites and information on a time when distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. Additionally, the GPS module may continuously calculate a current position in real time and calculate velocity information using the location or position information.

The A/V input unit 120 may input (or receive) an audio signal and/or a video signal. The A/V input unit 120 may include a camera 121 and a microphone 122. The camera 121 may process image frames of still images or moving images obtained by an image sensor in a video telephony mode or a photographing mode. The processed image frames may be displayed on a display 151, which may be a touch screen.

The image frames processed by the camera 121 may be stored in the memory 160 or may be transmitted to an external device through the wireless communication unit 110. The mobile terminal 100 may also include at least two cameras 121.

The microphone 122 may receive an external audio signal in a call mode, a recording mode and/or a speech recognition mode, and the microphone 122 may process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and/or so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and the sensing unit 140 may generate a sensing signal for controlling operation of the mobile terminal 100. For example, in an example of a slide phone, the sensing unit 140 may sense whether the slide phone is opened or closed. Further, the sensing unit 140 may sense whether the power supply 190 supplies power and/or whether the interface 170 is connected to an external device. The sensing unit 140 may also include a proximity sensor 141. The sensing unit 140 may sense a motion of the mobile terminal 100.

The output unit 150 may generate visual, auditory and/or tactile output, and the output unit 150 may include the display 151, an audio output module 152, an alarm 153 and a haptic module 154. The display 151 may display information processed by the mobile terminal 100. The display 151 may display a user interface (UI) and/or a graphic user interface (GUI) related to a telephone call when the mobile terminal 100 is in the call mode. The display 151 may also display a captured and/or received image, a UI or a GUI when the mobile terminal 100 is in the video telephony mode or the photographing mode.

The display 151 may include at least one of a liquid crystal display, a thin film transistor liquid crystal display, an organic light-emitting diode display, a flexible display and/or a three-dimensional display. The display 151 may be of a transparent type or a light transmissive type. That is, the display 151 may include a transparent display.

The transparent display may be a transparent liquid crystal display. A rear structure of the display 151 may also be of a light transmissive type. Accordingly, a user may see an object located behind the body (of the mobile terminal 100) through the transparent area of the body of the mobile terminal 100 that is occupied by the display 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

When the display 151 and a sensor sensing touch (hereafter referred to as a touch sensor) form a layered structure that is referred to as a touch screen, the display 151 may be used as an input device in addition to an output device. The touch sensor may be in the form of a touch film, a touch sheet, and/or a touch pad, for example.

The touch sensor may convert a variation in pressure applied to a specific portion of the display 151 or a variation in capacitance generated at a specific portion of the display 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display 151.

The proximity sensor 141 (of the sensing unit 140) may be located in an internal region of the mobile terminal 100, surrounded by the touch screen, and/or near the touch screen. The proximity sensor 141 may sense an object approaching a predetermined sensing face or an object located near the proximity sensor 141 using an electromagnetic force or infrared rays without having mechanical contact. The proximity sensor 141 may have a lifetime longer than a contact sensor and may thus have a wide application in the mobile terminal 100.

The proximity sensor 141 may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor 141.

For ease of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor 141 may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the wireless communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and/or the like. The audio output module 152 may output sounds through an earphone jack. The user may hear the sounds by connecting an earphone to the earphone jack.

The alarm 153 may output a signal for indicating generation of an event of the mobile terminal 100. For example, an alarm may be generated when receiving a call signal, receiving a message, inputting a key signal, and/or inputting a touch. The alarm 153 may also output signals in forms different from video signals or audio signals, for example, a signal for indicating generation of an event through vibration. The video signals and/or the audio signals may also be output through the display 151 or the audio output module 152.

The haptic module 154 may generate various haptic effects that the user can feel. One example of the haptic effects is vibration. An intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operations of the controller 180 and/or temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk and/or an optical disk. The mobile terminal 100 may also operate in relation to a web storage that performs a storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and/or a universal subscriber identify module (USIM). An identification device (including the user identification module) may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 or may be separated from the controller 180.

The controller 180 may perform a pattern recognition process capable of recognizing handwriting input or picture-drawing input applied to the touch screen as characters or images. The power supply 190 may receive external power and internal power and provide power required for operations of the components of the mobile terminal 100 under control of the controller 180.

According to hardware implementation, embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. Embodiments may be implemented by the controller 180.

According to software implementation, embodiments such as procedures or functions may be implemented with a separate software module that executes at least one function or operation. Software codes may be implemented according to a software application written in an appropriate software language. The software codes may be stored in the memory 160 and executed by the controller 180.

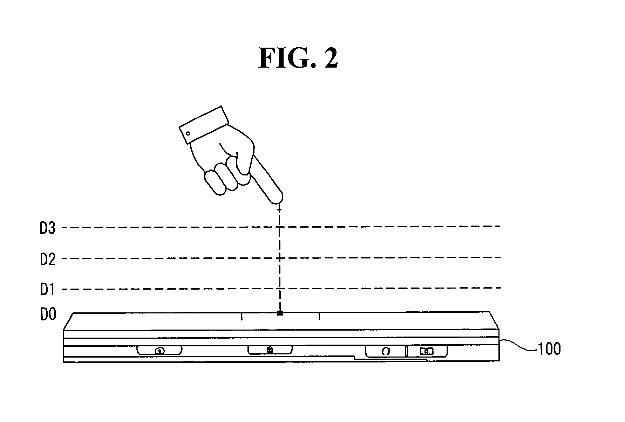

Next, FIG. 2 is a conceptual view illustrating a proximity depth of the proximity sensor 141. As shown in FIG. 2, when a pointer such as the user's finger, a pen, or the like, approaches the touch screen, the proximity sensor 141 disposed within or near the touch screen detects it and outputs a proximity signal. The proximity sensor 141 may also be configured to output a different proximity signal according to the distance (referred to as a 'proximity depth', hereinafter) between the closely touched pointer and the touch screen.

FIG. 2 also shows the section of the touch screen with the proximity sensor 141 for detecting, for example, three proximity depths. The proximity sensor 141 may detect three or less or four or more proximity depths. In more detail, when the pointer is fully brought into contact with the touch screen d0, this position is recognized as a contact touch. When the pointer is positioned to be spaced apart by shorter than a distance d1 on the touch screen, this position is recognized as a proximity touch with a first proximity depth.

If the pointer is positioned to be spaced apart by the distance longer than the distance d1 but shorter than a distance d2 on the touch screen, this position is recognized as a proximity touch with a second proximity depth. Also, if the pointer is positioned to be spaced apart by the distance longer than the distance d2 but shorter than a distance d3, this position is recognized as a proximity touch with a third proximity depth. If the pointer is positioned to be spaced apart by longer than the distance d3 on the touch screen, this position is recognized that the proximity touch has been released.

Accordingly, the controller 180 can recognize the proximity touches as various input signals according to the proximity depths and proximity positions of the pointer, and control various operations according to the various input signals.

The embodiments of the present invention are described below.

In the present invention, a display unit 151 is defined as a touch screen 151 for the convenience of description. As described above, the touch screen 151 may perform both a function of displaying information and a function of inputting information. However, it is apparently emphasized that the prevent invention is not limited thereto. The term touch, mentioned in the present specification, is construed to mean both a contact touch and a proximity touch.

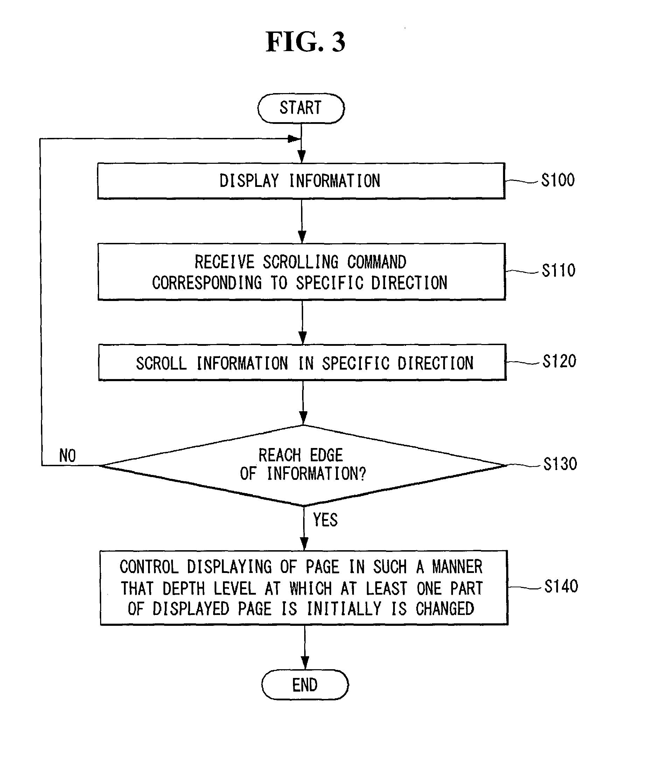

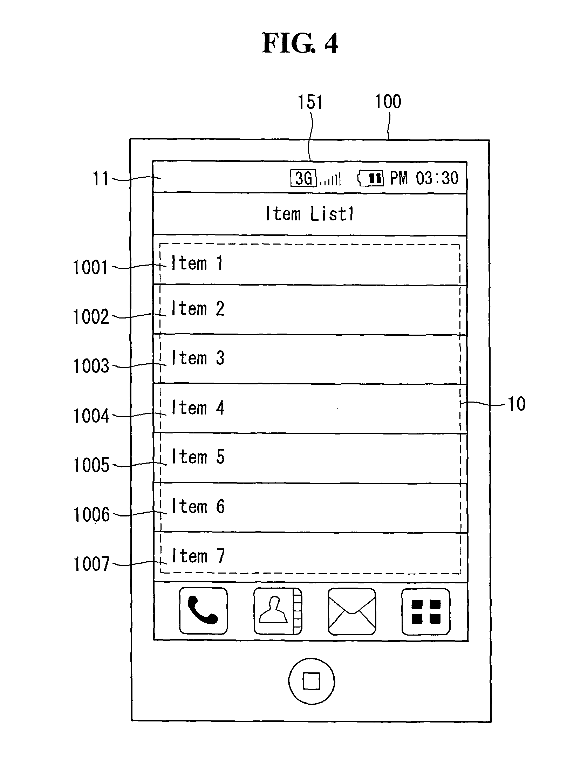

Fig. 3 is a flow chart of a method of controlling the electronic device according to a first embodiment of the present invention. Figs. 4 to 26 are diagrams for describing the method of controlling the electronic device according to the first embodiment of the present invention.

The method of controlling the electronic device according to the first embodiment of the present invention may be embodied in the electronic device 100 described referring to Figs 1 and 2. The method of controlling the electronic device according to the first embodiment of the present invention and the operation of the electronic device 100 for embodying this method are described below in detail referring to the related drawings.

Referring to Fig. 3, the controller 180 may display information on the touch screen 151 (S100). The information described above may include multiple items of sub-information as an electronic document.

The information referred to in the present specification may include all types of data that are able to be displayed on the touch screen 151.

Fig. 4 illustrates an example in which specific information 10 is displayed on the touch screen 151. The specific information 10 illustrated in Fig. 4 is an item list including multiple items 1001, 1002, 1003, 1004, 1005, 1006, and 1007.

The information 10, as described below, may include more items in addition to the multiple items 1001, 1002, 1003, 1004, 1005, 1006, and 1007 illustrated in Fig. 4, but the limitation on the size of the touch screen 151 does not allow for displaying of the entire items.

A user, as described below, may scroll through the information 10 using predetermined commands in order to look for the other items that are not currently displayed on the touch screen 151.

When the information 10 are not entirely displayed on the touch screen 151 due to the limitation on the size of the touch screen 151, the controller 180 may provide the touch screen 151 with a specific indicator for indicating the items that are not displayed on the touch screen 151.

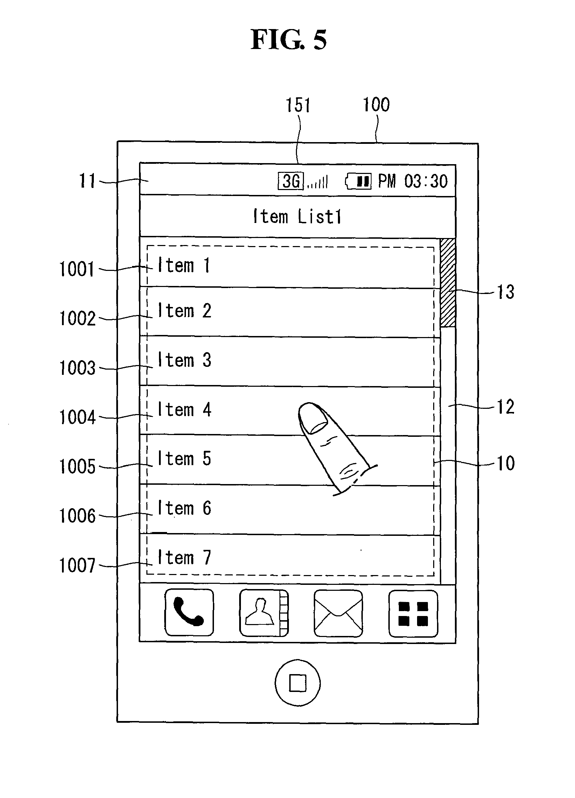

Fig. 5 is a diagram for describing a scroll bar.

Referring to Fig. 5, for example, when the user touches the touch screen 151 with his/her finger, a bar 12 may be displayed on the right side of the touch screen 151, and the indicator 13, which indicates a position of a page currently displayed on the touch screen 151, relative to the entire information 10, may be displayed on the touch screen 151. The bar 12 and the indicator 13 are referred to also as the scroll bar.

The indicator 13 may be selectable, or may not be selectable. When the indicator 13 is selectable, the user may scroll through the information 10 by selecting and moving the indicator 13.

A screen illustrated in Fig. 4, may include an indicator area 11 for providing status information on the electronic device 100, such as wireless communication, signal strength, battery status, and time.

The controller 180 may receive a scrolling command corresponding to a specific direction via the touch screen 151 (S110). The controller 180 may scroll through the information 10 in the specific direction according to the received scrolling command (S120).

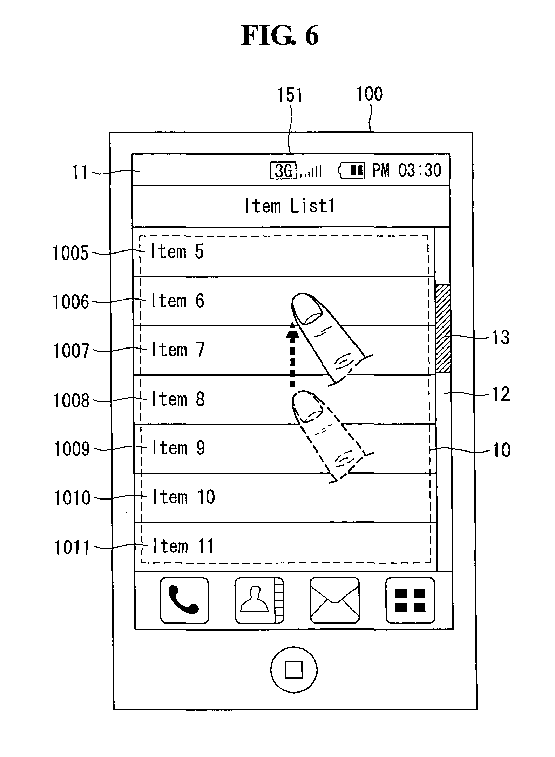

Fig. 6 is a diagram illustrating an example in which the information is scrolled through on the touch screen 151.

Referring to Fig. 6, for example, when the user drags up the touch screen 151 with his/her finger, the controller 180 may scroll up the information 10.

As illustrated in Fig. 6, while scrolling up the information 10, the controller 180 may display items included in the information 10, that is, some items 1005, 1006, and 1007 displayed on the screen illustrated in Fig. 5 and some items 1008, 1009, 1010, and 1011 not displayed on the illustrated screen, on the touch screen 151.

As the information 10 is scrolled up, the position of the indicator 13 on the bar 12 is moved.

The controller 180 may determine whether the edge of the information 10 is reached while scrolling through the information 10 in the specific direction according to the received scrolling command (S130).

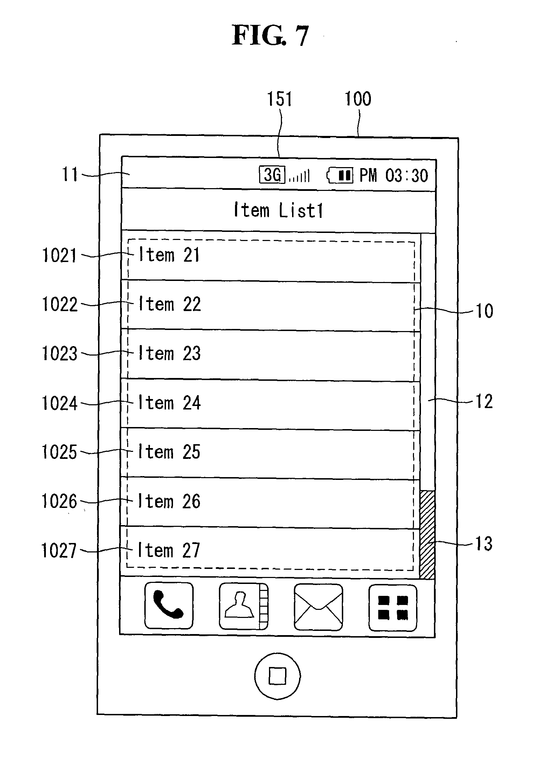

Fig. 7 is a diagram illustrating an example in which the edge of the information 10 is reached while scrolling through the screen.

The controller 180 may control the displaying of the page in such a manner that a depth level, at which at least one part of the page displayed on the touch screen 151 is initially, is changed when the edge of the information 10 is reached as a result of the determination in Step S130 (S140).

The page that is displayed on the touch screen 151 when reaching the edge of the touch screen 151 is hereinafter referred to as an edge page.

There may be various manners that the controller 180 performs Step S140.

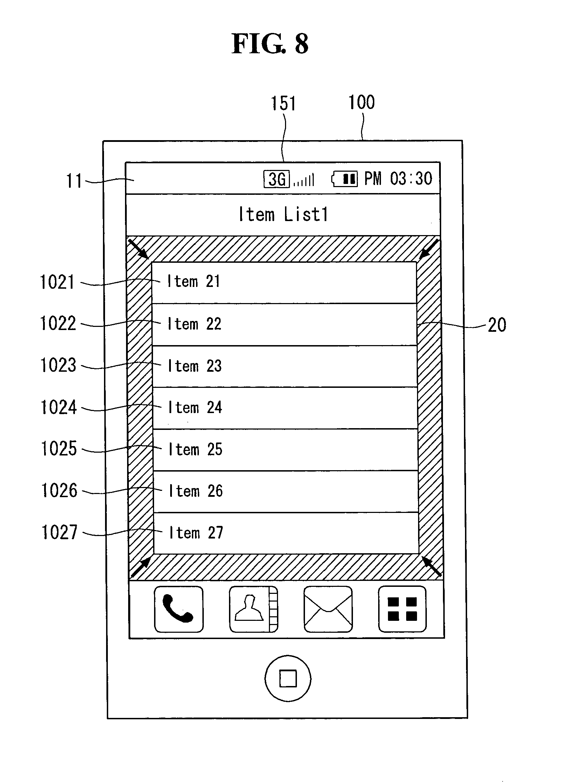

Figs. 8 to 12 are diagrams, each illustrating a case where the depth level, at which the information 10 is initially, corresponds to a two-dimensional plane, as a first manner in which the controller 180 performs Step S140.

In embodiments described below referring to Figs. 8 to 12, it is assumed that the depth level, at which the edge page is initially, is a first depth level corresponding to the two-dimensional plane, in a case where the edge of the information is reached during the scrolling.

When the edge of the information is reached during the scrolling, the controller 180 may control the displaying of the edge page in such a manner that the first depth level, at which at least one part of the edge page is initially, is changed to a second depth level, different from the first depth level.

At this point, the controller 180 may display the entire edge page at the second depth level when the edge of the information is reached during the scrolling.

Referring to Fig. 8, for example, the controller 180 may display the entire edge page 20 inwardly on the screen as if it went into the screen, by reducing the entire edge page 20 when reaching the edge of the information.

As illustrated in Fig. 8, by displaying the entire edge page 20 inwardly on the screen as if it went into the screen, the controller 180 may control the displaying of the edge page 20 in such a manner that a first depth level (refer to Fig. 7) at which the edge page 20 is initially, is changed to the second depth level, different from the first depth level.

On the other hand, the controller 180 may determine the second depth level according to strength of a scrolling command signal for reaching the edge of the information 10.

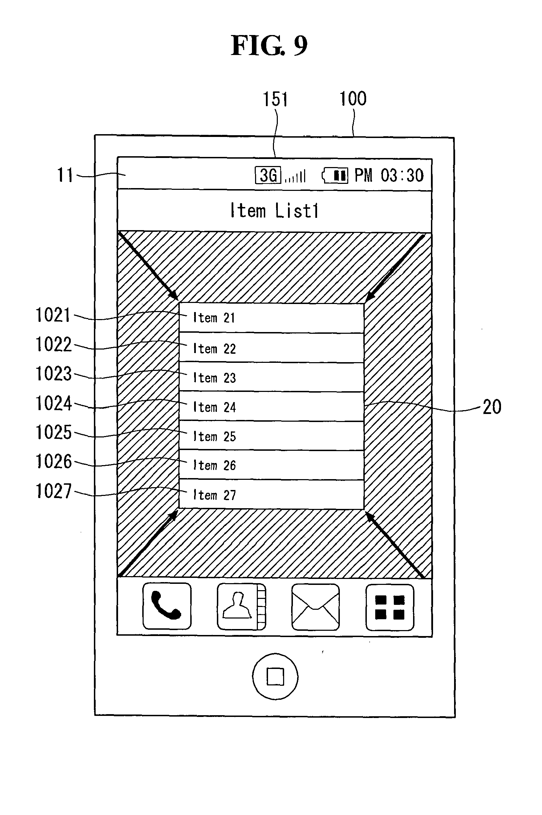

Fig. 9 is a diagram for describing the second depth level that is changed depending on the strength of the scrolling command signal.

As described above, for example, when the user drags up the touch screen 151 using a first force and thus reaches the edge of the information 10, the controller 180 may control the displaying of the edge page 20 in such a manner that the first depth level, at which the edge page 20 is initially, is changed to the second depth level, different from the first depth level, as on the screen illustrated in Fig. 8.

Furthermore, for example, when the user drags up the touch screen 151 with a second force greater than the first force and thus reaches the edge of the information 10, the controller 180 may control the displaying of the edge page 20 in such a manner that the edge page 20 is displayed further inwardly on the screen as if it went into the screen than on the screen illustrated in Fig. 8.

That is, the controller 180 may control the displaying of the edge page 20 in such a manner that the second depth level illustrated in Fig. 9, at which the edge page 20 is, is greater than the second depth level illustrated in Fig. 8, at which the edge page 20 is.

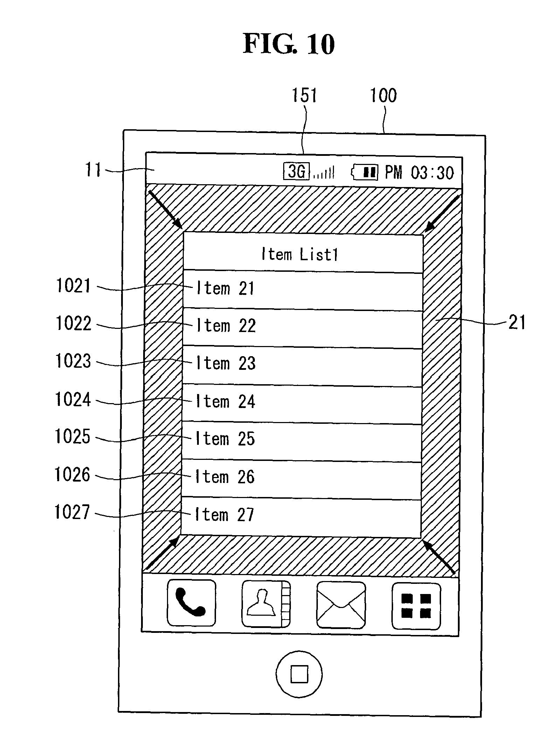

Figs 10 to 12 are diagrams that relate to embodiments similar to those in Figs. 8 and 9 and particularly to embodiments in association with a range of the edge pages that are at the changed levels, in a case where the edge of the information is reached during the scrolling and thus the first depth level, at which at least one part of the edge page is initially, is changed.

Referring to Fig. 10, for example, the edge page 21 that is at the changed depth level may include a title of the information. In a case of Figs. 8 and 9, for example, the edge page 20 that is at the changed depth level does not include the title of the information.

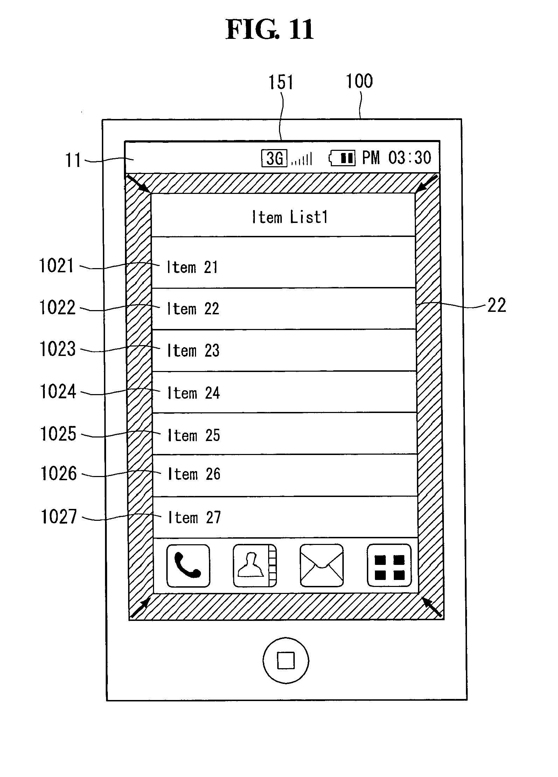

Furthermore, referring to Fig. 11, for example, the edge page 22 that is at the changed depth level includes the entire display area of the touch screen 151 except for the indicator area 11.

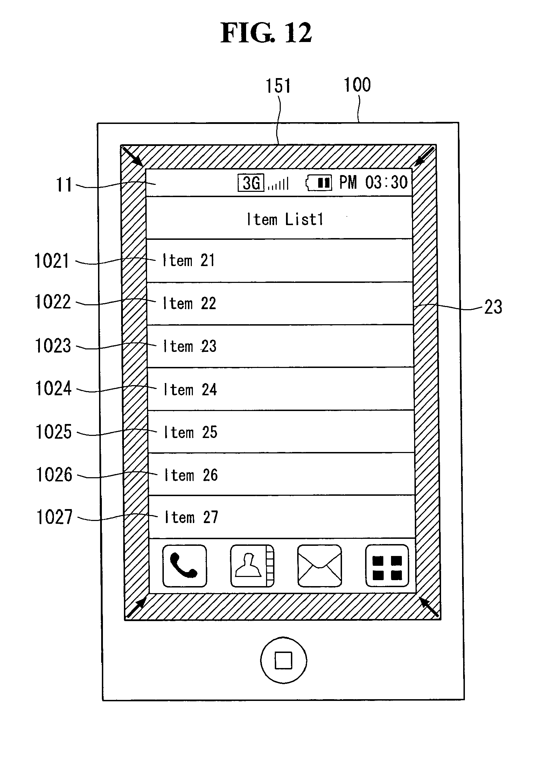

Furthermore, referring to Fig. 12, for example, the edge page 23 that is at the changed depth level includes the entire display area of the touch screen 151 including the indicator area 11.

According to the embodiment described above referring to Figs 4 to 12, the displaying of the page is controlled in such a manner that the edge page is displayed inwardly on the screen as if it went into the screen when the edge of the information is reached while scrolling through the information.

On the other hand, according to the technological idea behind the present invention, the displaying of the edge page may be controlled in such a manner that the edge page is displayed outwardly on the screen as if it projected out of the screen when the edge of the information is reached while scrolling through the information.

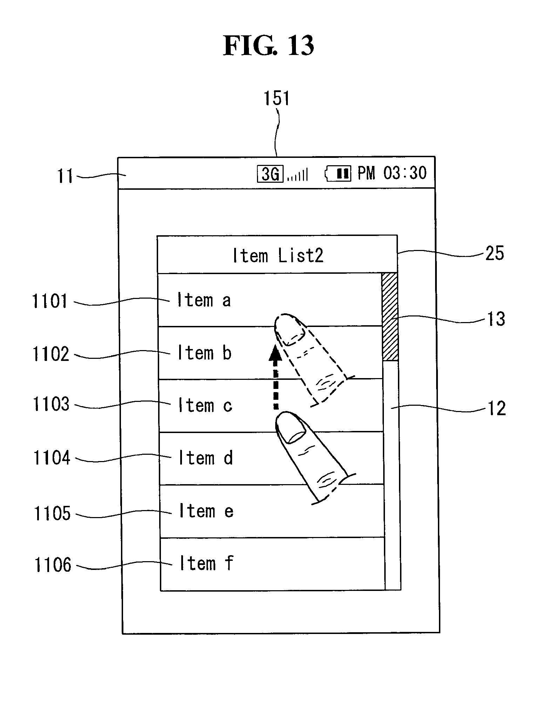

Figs. 13 to 17 are diagrams for describing an example in which the displaying of the edge page is controlled in such a manner that the edge page is displayed outwardly on the screen as if it projected out of the screen.

Referring to Fig. 13, the controller 180 may display a popup window 25 on the touch screen 151 in a specific situation, or at the user's command.

The popup window 25, as illustrated in Fig. 13, may include multiple items 1101, 1102, 1103, 1104, 1105, and 1106.

As illustrated in Fig. 13, the user may drag the inside of the popup window 25 to scroll through the multiple items 1101, 1102, 1103, 1104, 1105, and 1106 included in the popup window 25.

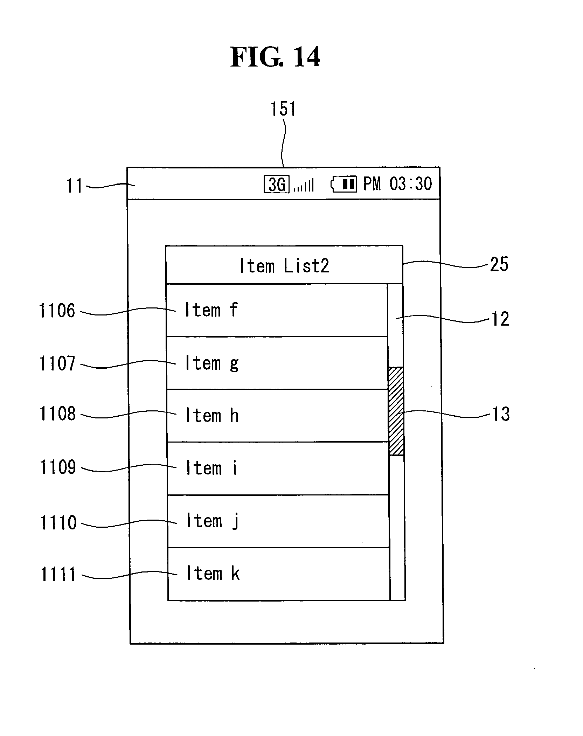

Fig. 14 is a diagram illustrating an example in which new items 1107, 1108, 1109, 1110, and 1111 that are not included in the popup window 25 illustrated in Fig. 13 are displayed by dragging the inside of the popup window 25 at the user's command.

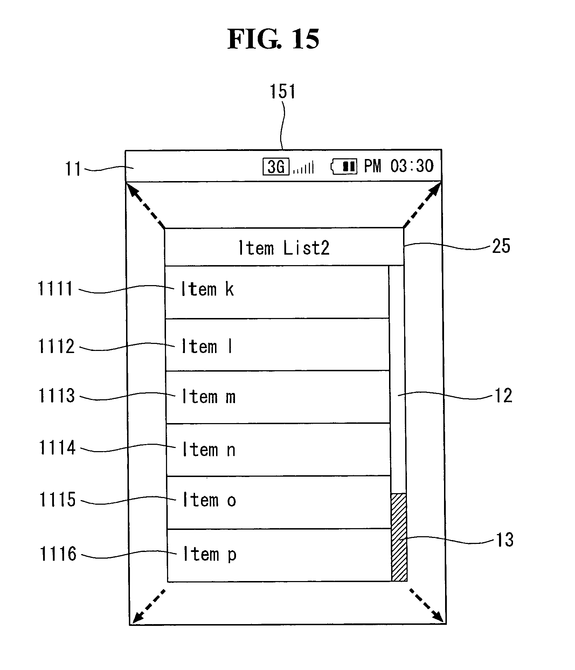

Fig. 15 is a diagram illustrating a case where the inside of the popup window 25 is continuously dragged, and thus the edge of the information, displayed on the popup window 25 in which new items included in the popup window 25 are further not present, is reached.

The popup window 25 including multiple items 1111, 1112, 1113, 1114, 1115, and 1116 illustrated in Fig. 15 correspond to a page that is at the depth level that is changed according to the embodiment described above.

That is, the controller 180, may control the displaying of the popup window 25 in such a manner that when the edge of the information displayed inside the popup window 25 is reached during the scrolling, as illustrated in Fig. 15, the popup window 25 is displayed outwardly on the screen as if it projected out of the screen, by enlarging the popup window 25 in the direction indicated by the arrow illustrated in Fig. 15. At this point, the popup window 25 may correspond to the edge page described above.

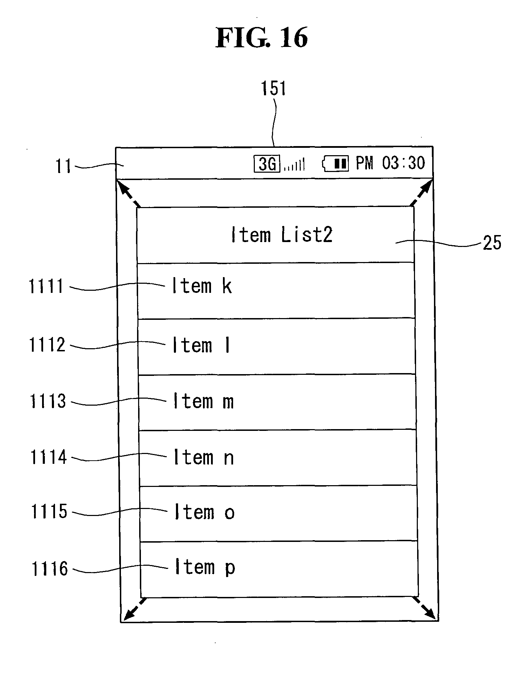

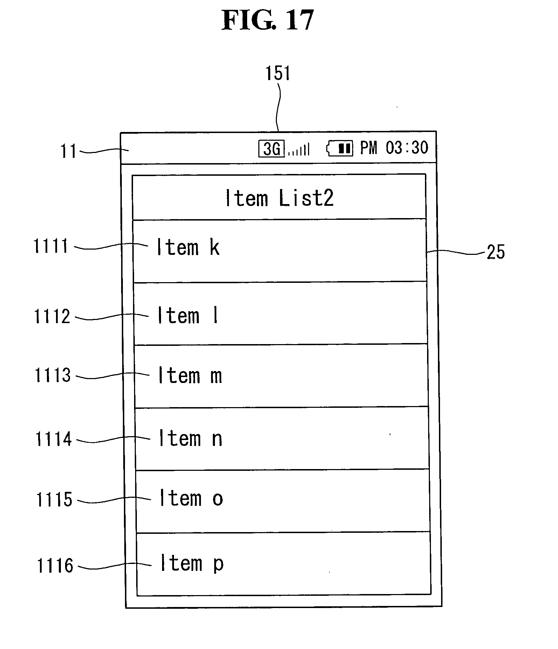

Figs. 16 and 17 are diagrams each illustrating an example in which the popup window 25 illustrated in Fig. 15 is controlled in such a manner that the popup window 25 is enlarged to be displayed outwardly on the screen as if it projected out of the screen.

Also in a case of Figs. 16 and 17, as described above, the degree to which the popup window 25 is enlarged may vary depending on the strength of the user's scrolling command signal.

The focus of the embodiments described above referring to Figs. 8 and 17 is on the control of the depth level at which the entire edge page is, but the technological idea behind the present invention is not limited thereto.

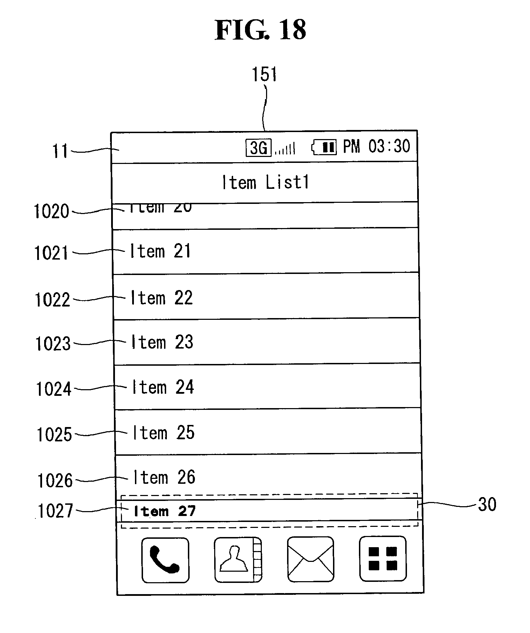

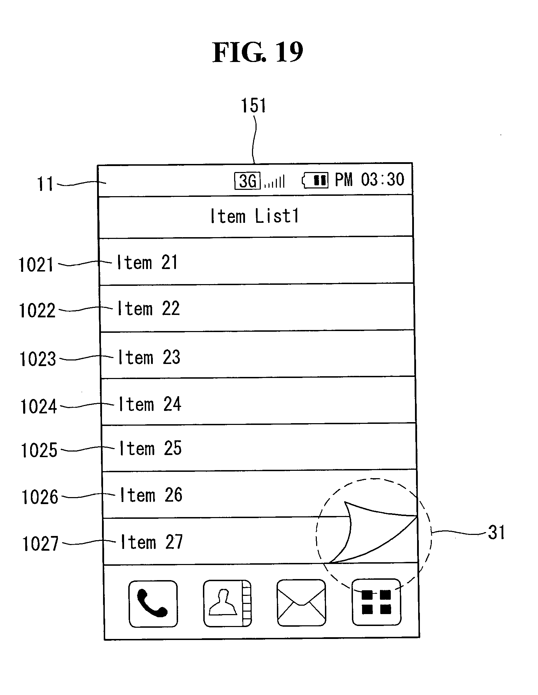

Figs. 18 and 19 are diagrams for describing a case where one part of the edge page is controlled in such a manner that the depth level, at which one part of the edge page is initially, is changed.

Referring to Fig.18, for example, the controller 180 may display the displaying of the edge page in such a manner that the depth level, at which one part 30 of the edge page is, is changed as if the edge of the edge page was rolled up, when the edge page is reached during the scrolling. And the controller 180 may control the depth level, at which the one part 30 of the edge page is, in such a manner as to be displayed at the initial depth level.

Referring to Fig.19, for example, the controller 180 may display the displaying of the edge page in such a manner that the depth level, at which the one part 31 of the edge page is, is changed as if a leaf of a book was turned over, when the edge page is reached during the scrolling. And the controller 180 may return the depth level, at which the one part 31 of the edge page is, back to the initial depth level.

The embodiments described above referring to the drawings may be applied in the same manner, also in a case where when the touch screen 151 includes a panel for realizing stereoscopic vision, stereoscopic image using binocular disparity is displayed via the touch screen 151.

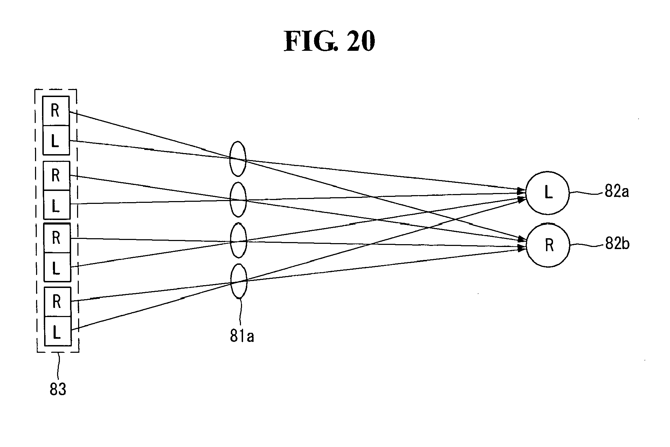

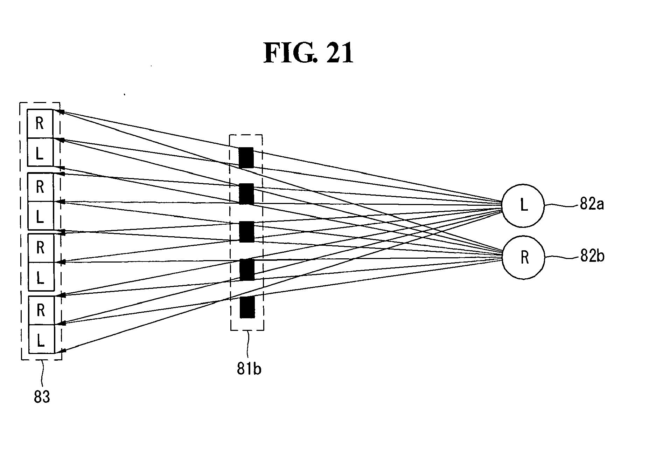

Figs. 20 and 21 are diagrams for describing a method of displaying a stereoscopic image using the binocular disparity, which relates to the embodiments according to the present invention. Fig.20 illustrates a method using a lenticular lens array, and Fig. 21 illustrates a method using a parallax barrier.

The binocular disparity (stereo disparity) refers to the difference in image location of an object seen by the left and right eyes of a human being. A synthesized image resulting from a synthesis of images seen by the left and right eyes in the brain enables the human being to feel a stereoscopic effect. A phenomenon in which the human being feels the stereoscopic effect is hereinafter defined as stereoscopic vision, and an image that causes the stereoscopic vision is hereinafter defined as a stereoscopic image. A specific object included in the image, which causes the stereoscopic vision, is defined as a stereoscopic object.

The method of displaying the stereoscopic image using the binocular disparity falls into two categories: a glasses-type in need of special glasses, and a non-glasses-type not in need of glasses. The glasses-type is divided into a type using color glasses having wavelength selectivity, a polarizing glasses type using a light shading effect resulting from light polarization difference, a time-division glasses type providing alternately left and right images within the eye's afterimage time and the like. In addition, there is a type that provides the left and right eyes with filters different in transmissivity, respectively, and thus gives the stereoscopic effect of motion in the right and left directions that depends on time difference in the visual system, resulting from transmissivity difference.

The non-glasses type, in which the stereoscopic effect occurs on an image display surface instead of on an observer, is divided into parallax barrier type, a lenticular lens type or a micro lens array type and others.

Referring to Fig. 20, a display module 151 may include a lenticular lens array 81a. The lenticular lens array 81A is positioned between a display surface 83 in which pixels L for a left eye 82a and pixels R for a right eye 82b are alternately arranged in the width direction and the left and right eyes 82a and 82b, and provides optical discrimination orientation with respect to the pixels L for the left eye 82a and the pixels R for the right eye 82b. Accordingly, the image passing through the lenticular lens array 81A is separated and observed in the left eye 82a and the right eye 82b, and the human being's brain synthesizes the image seen by the left eye 82a and the image seen by the right eye 82b and as a result observes the stereoscopic image.

Referring to Fig. 21, the display module 151 may include a lenticular lens array 81b that is arranged in the vertical direction, in order to display the stereoscopic image. The lenticular lens array 81B is positioned between the display surface 83 in which the pixels L for the left eye 82a and the pixels R for the right eye 82b are alternately arranged in the width direction and the left and right eyes 82a and 82b, and serves to enable the image to pass through vertically-arranged, quadrilateral-shaped apertures, and to be separated and observed in the left eye 82a and the right eye 82b. Accordingly, the human being's brain synthesizes the image seen by the left eye 82a and the image seen by the right eye 82b and as a result observes the stereoscopic image. The lenticular lens array 81b turns on to separate an incoming image only when displaying the stereoscopic image, and turns off and allows the incoming image to pass without separation when not displaying the stereoscopic image.

On the other hand, the methods of displaying the stereoscopic image, described above, is for describing the embodiments according to the present invention, and therefore the present invention is not limited thereto. The present invention may display the stereoscopic image using the binocular disparity through the use of various methods in addition to the methods described above.

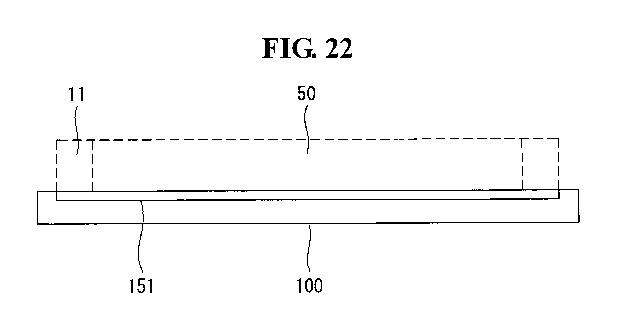

Referring to Figs. 22 to 26, embodiments are described in which the method of controlling the electronic device according to the first embodiment according to the present invention, illustrated in Fig.3, is applied to the stereoscopic image.

Fig. 22 is a conceptional diagram illustrating a lateral side of the electronic device 100 to describe a case where the stereoscopic image is displayed via the touch screen 151. It is assumed that a first area 50 depicted by reference numeral 50 among areas illustrated in Fig. 22 corresponds to an area corresponding to an area depicted by reference numeral 10 in Fig. 7 and the information displayed on the first area 50 is scrolled through.

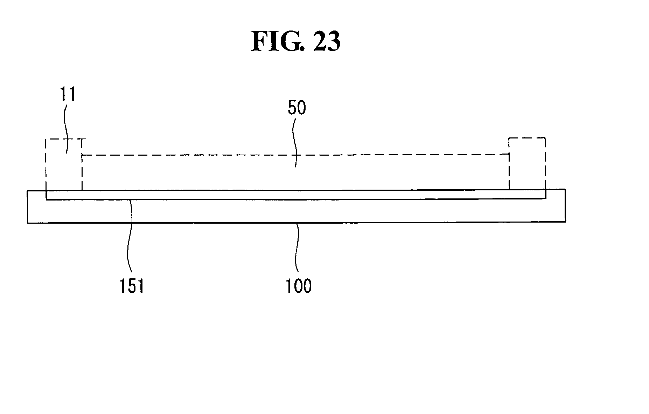

Fig. 23 is a diagram illustrating a case where embodiments illustrated in Figs. 8 and 9 are applied to the stereoscopic image.

For example, when the edge page is reached during the scrolling by the user's manipulating of the first area 50, the controller 180 may control the depth level, at which the edge page is, in such a manner that the depth level, at which the edge page is, is changed from the initial depth level (refer to Fig. 22), as illustrated in Fig. 23.

The controller 180 may return the depth level, at which the edge page is, back to the initial depth level after maintaining a state illustrated in Fig. 23 for a predetermined period of time.

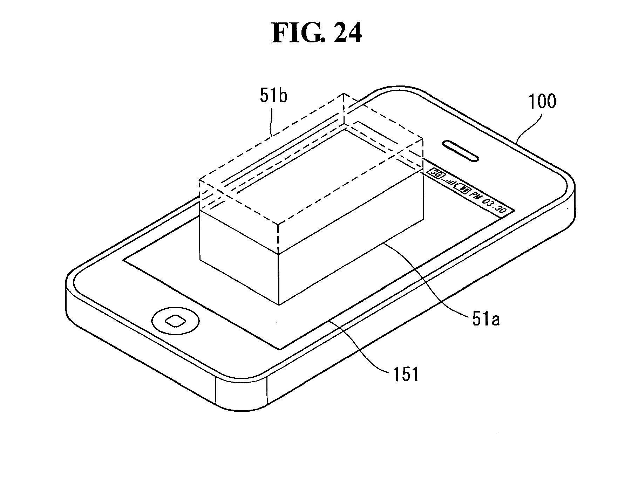

Fig. 24 is a diagram illustrating a case where embodiments illustrated in Figs. 15 to 17 are applied to the stereoscopic image. It is assumed that a second area 51a depicted by reference numeral 51a in Fig. 24 corresponds to an area corresponding to an area depicted by reference numeral 25 in Fig. 15 and the information displayed on the second area 51a is scrolled through.

For example, when the edge page is reached during the scrolling by the user's manipulating of the first area 50, the controller 180 may control the depth level at which the edge page is, in such a manner that the depth level, at which the edge page is, is changed from the initial depth level, as illustrated in Fig. 24, and thus may control the displaying of the second area 51a in such a manner that the second area 51a is changed to the state depicted by reference numeral 51b.

After maintaining a state of the second area 51b depicted by reference numeral 51b for a predetermined period of time, the controller 180 may return the depth level, at which the edge page of the second area 51b on which to display the edge page is, back to the depth level at which the second area 51a depicted by reference numeral 51a is initially.

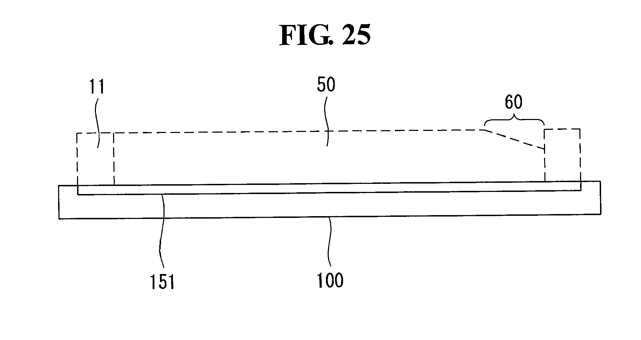

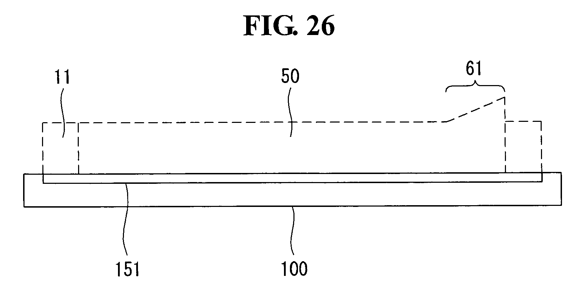

Figs. 25 and 26 are diagrams for describing a case where one part of the scroll bar including an area in which the information is scrolled through is controlled according to the embodiment of the present invention.

For example, when the edge page is reached while the information displayed on the first area 50 is scrolled through by the user's manipulating of the first area 50, the controller 180 may control the depth level at which one part 60 or 61 of the edge page is, in such a manner that the depth level at which the one part 60 or 61 of the edge page is changed from the initial depth level (refer to Fig. 22), as illustrated in Fig. 25 or 26.

The controller 180 may return the depth level at which the one part 60 or 61 is, back to the initial depth level illustrated in Fig.22 after maintaining the state illustrated in Fig. 25 or 26 for a predetermined period of time.

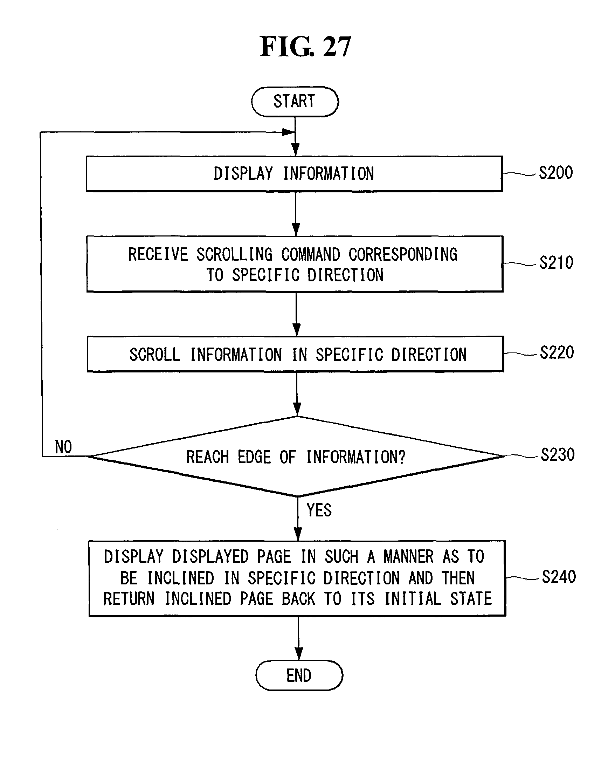

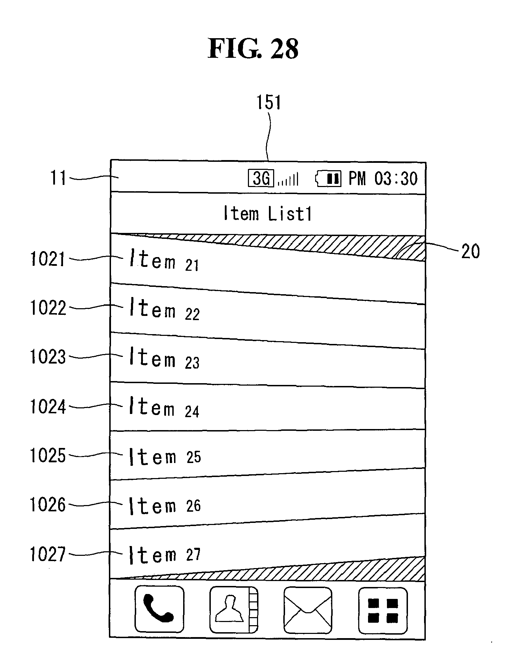

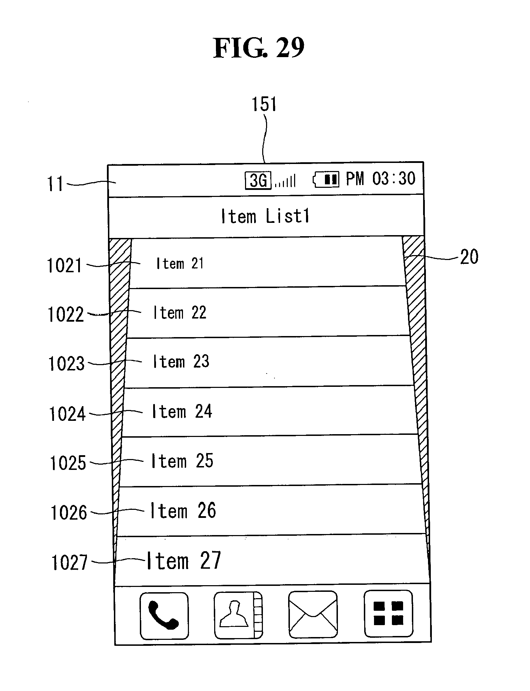

Fig. 27 is a flow chart of a method of controlling the electronic device according to a second embodiment of the present invention. Figs. 28 and 29 are diagrams for describing the method of controlling the electronic device according to the second embodiment of the present invention.

The method of controlling the electronic device according to the second embodiment of the present invention may be embodied in the electronic device 100 described referring to Figs 1 and 2. The method of controlling the electronic device according to the second embodiment of the present invention and the operation of the electronic device 100 for embodying this method are described below in detail referring to the related drawings.

Referring to Fig. 27, the controller 180 may display information on the touch screen 151 (S200).

The controller 180 may receive a scrolling command corresponding to a specific direction via the touch screen 151 (S210). The controller 180 may scroll through the information in the specific direction according to the received scrolling command (S220).

The controller 180 may determine whether the edge of the information is reached while scrolling through the information in the specific direction according to the received scrolling command (S230).

Steps S200 to S230 are the same as Steps S100 to S130 in the embodiment described above according to the present invention, respectively.

When the edge of the information is reached as a result of a determination in Step S230, the controller 180 may return the page displayed on the touch screen 151 back to its initial state, but in such a manner that the page is inclined in a specific direction (S240).

For example, when the edge pate is reached while scrolling through the information including an item list, the controller 180 may return the edge page 20 back to its initial state (refer to Fig. 7), but in such a manner that the edge page 20 is inclined to the right, as illustrated in Fig. 28.

Fig. 29 is a diagram illustrating an example in which when the edge page 20 is reached, the edge page 20 is inclined upward.

On the other hand, the first embodiment described above referring to Figs. 3 to 29 may be embodied using other technological characteristics of the present invention.

For example, the controller 180 may receive a scrolling command corresponding to the specific direction via the touch screen 151 in a state where some of the information is displayed in a first layer. The first layer is defined as a layer having a first depth level when using the term the depth level referred to in the first embodiment described above.

Furthermore, the controller 180 may scroll through the information in the specific direction while maintaining the information in the first layer, according to the received scrolling command.

When the edge page is reached while the information is scrolled through in the specific direction with the information being maintained in the first layer as the scrolling command is repeatedly received, the controller 180 may control the displaying of the edge page in such a manner that at least one part of the edge page is displayed in a second layer different from the first layer.

The second layer is defined as a layer having a second depth level different from the first depth level.

The first layer and the second layer may be applied to both of a two-dimensional image and a three-dimensional image as in the first embodiment.

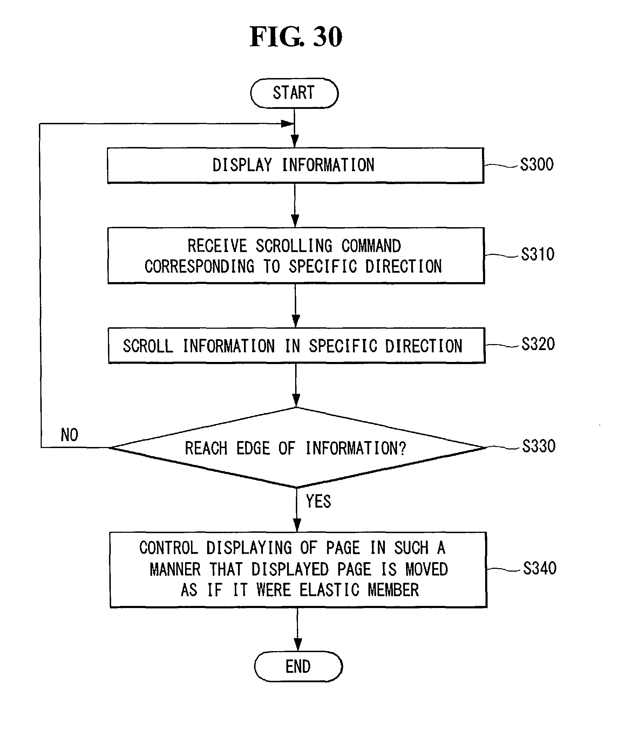

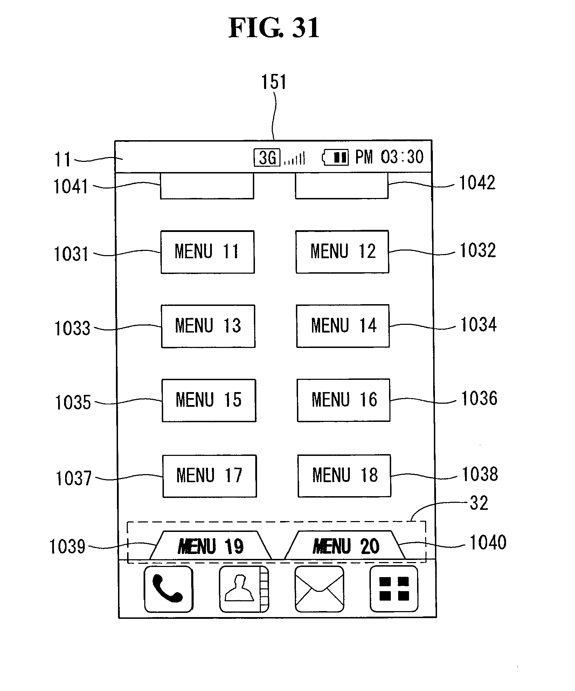

Fig. 30 is a flow chart of a method of controlling the electronic device according to a third embodiment of the present invention. Figs. 31 to 35 are diagrams for describing the method of controlling the electronic device according to the third embodiment of the present invention.

The method of controlling the electronic device according to the third embodiment of the present invention may be embodied in the electronic device 100 described referring to Figs 1 and 2. The method of controlling the electronic device according to the third embodiment of the present invention and the operation of the electronic device 100 for embodying this method are described below in detail referring to the related drawings

Referring to Fig. 30, the controller 180 may display information on the touch screen 151 (S300).

The controller 180 may receive a scrolling command corresponding to a specific direction via the touch screen 151 (S310). The controller 180 may scroll through the information in the specific direction according to the received scrolling command (S320).

The controller 180 may determine whether the edge of the information is reached while scrolling through the information in the specific direction according to the received scrolling command (S330).

The Steps S300 to S330 are the same as Steps S100 to S130 in the first embodiment described above according to the present invention, respectively.

When the edge of the information is reached as a result of a determination in Step S330, the controller 180 may control the page displayed on the touch screen 151 in such a manner that the page is moved like an elastic member (S340).

Figs. 31 to 34 illustrate diagrams each illustrating an example in which the edge page is moved as if it were the elastic member.

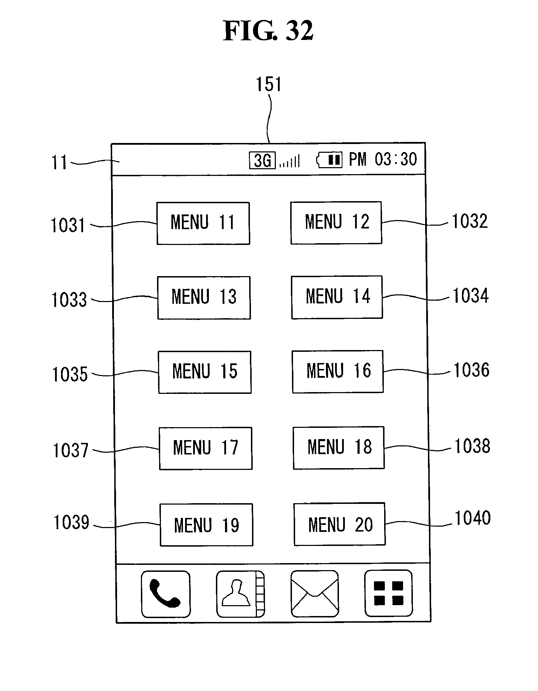

For example, when the edge page is reached while scrolling through the information including multiple items 1041, 1042, 1031, 1032, 1033, 1034, 1035, 1036, 1037, 1038, 1039, and 1040, the controller 180 may control the displaying of the edge page, in such a manner that as if the edge page were the elastic member, an area around the edge page is contracted as illustrated in Fig. 31 and then is expanded to return back to its initial state as illustrated in Fig. 32.

Figs. 31 and 32 are diagrams each illustrating an example in which the edge page is moved as if it were the elastic member such as a golf ball.

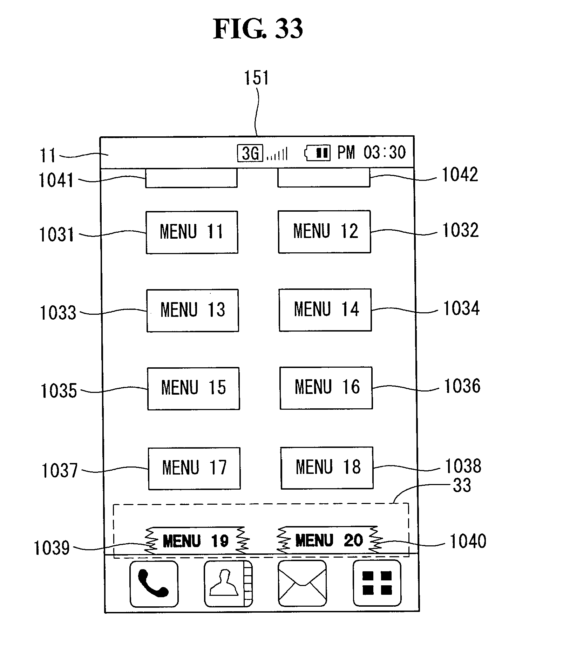

Fig. 33 is a diagram illustrating an example in which the edge page is moved as if it were flexible paper.

For example, when the edge page is reached while scrolling through the information, the controller 180 may control the displaying of the edge page in such a manner that an area 33 around the edge is crumpled like paper as illustrated in Fig. 33, and then returns back to its initial state illustrated in Fig. 32.

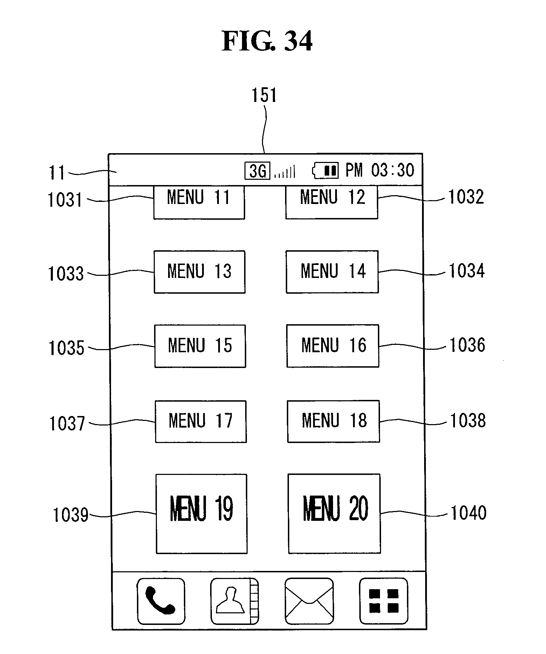

Fig. 34 is a diagram illustrating an example in which the edge page is moved as if it were a spring.

For example, when the edge page is reached while scrolling through the information, the controller 180 may control the displaying of the edge page in such a manner that like the spring, the edge page is expanded as illustrated in Fig. 34, and then returns back to its initial state illustrated in Fig. 32.

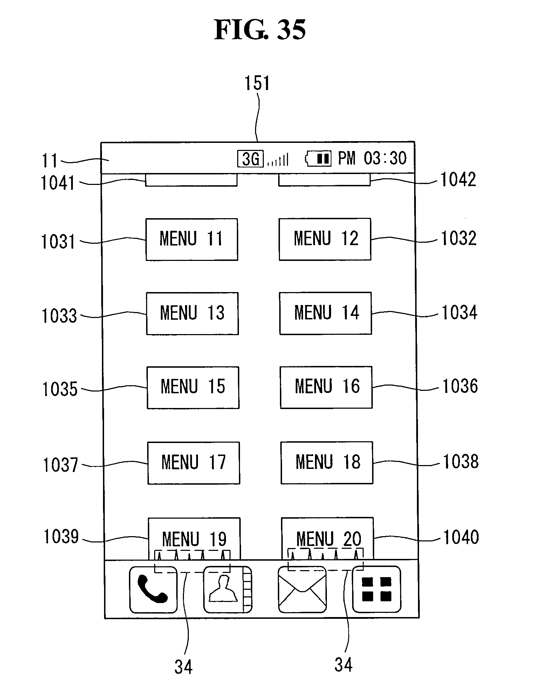

On the other hand, Fig. 35 is a diagram illustrating a case where when the edge page is reached, cracks 34 occur around the edge.

Referring to Fig. 35, for example, when the edge page is reached while scrolling through the information, the controller 180 may control the displaying of the edge page in such a manner that the edge page is not moved like the elastic member as illustrated in Figs. 31 to 34, but the cracks 34 occur around the edge in a similar manner to the operation of the elastic member, and may control the displaying of the edge page in such a manner that the edge page returns back to its initial state, as illustrated in Fig. 32.

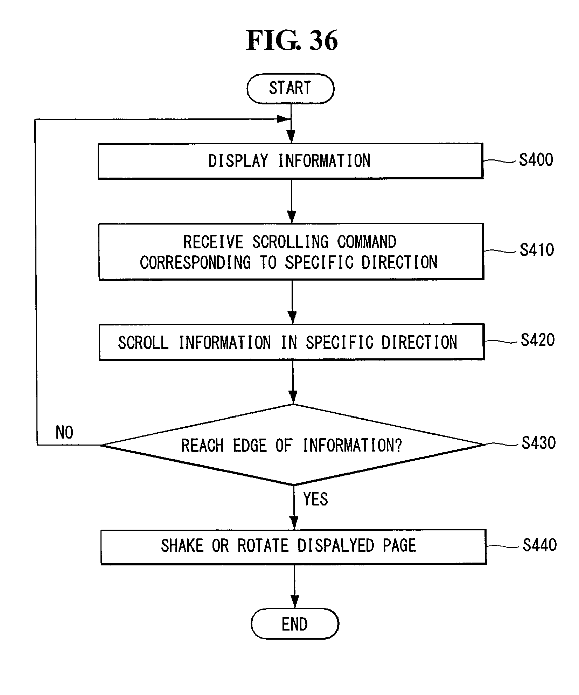

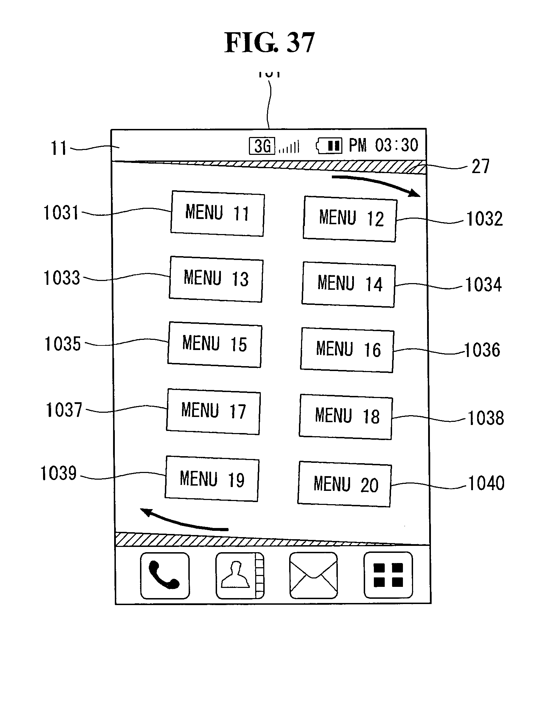

Fig. 36 is a flow chart of a method of controlling the electronic device according to a fourth embodiment of the present invention. Fig 37 is a diagram for describing a method of controlling the electronic device according to the fourth embodiment of the present invention.

The method of controlling the electronic device according to the fourth embodiment of the present invention may be embodied in the electronic device 100 described referring to Figs 1 and 2. The method of controlling the electronic device according to the fourth embodiment of the present invention and the operation of the electronic device 100 for embodying this method are described below in detail referring to the related drawings.

Referring to Fig. 36, the controller 180 may display information on the touch screen 151 (S400).

The controller 180 may receive a scrolling command corresponding to a specific direction via the touch screen 151 (S410). The controller 180 may scroll through the information in the specific direction according to the received scrolling command (S420).

The controller 180 may determine whether the edge of the information is reached while scrolling through the information in the specific direction according to the received scrolling command (S430).

Steps S400 to S430 are the same as Steps S100 to S130 in the embodiment described above according to the present invention, respectively.

When the edge of the information is reached as a result of a determination in Step S430, the controller 180 may shake or rotate the page displayed on the touch screen 151 (S440).

Referring to Fig. 37, for example, when the edge page is reached while scrolling through the information, the controller 180 may shake the edge page 27 in the left and right directions or in the upward and downward directions, for a predetermined period of times or a predetermined number of times, or may rotate the edge page 27 clockwise or counterclockwise, a predetermined number N (a positive number) of times.

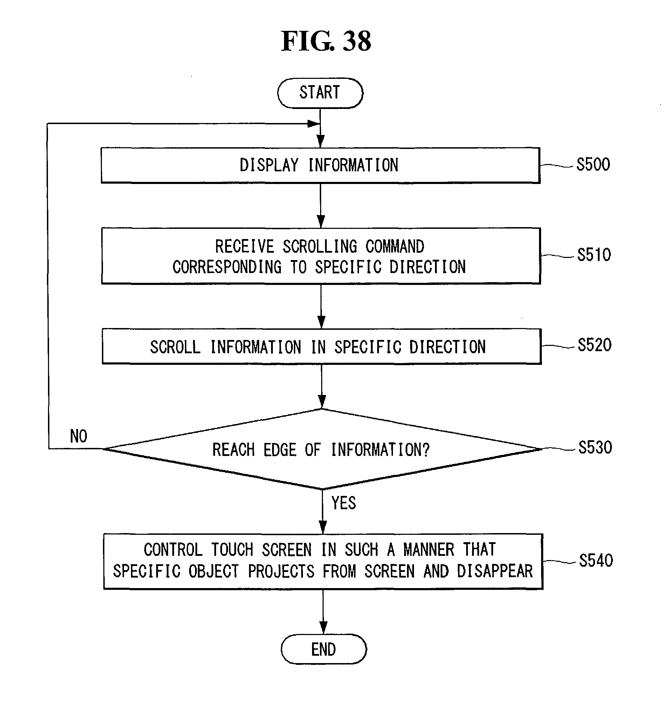

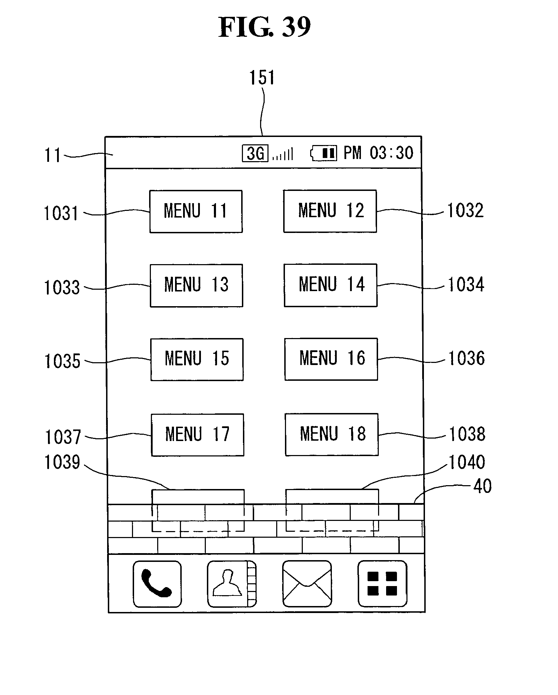

Fig. 38 is a flow chart of a method of controlling the electronic device according to a fifth embodiment of the present invention. Fig 39 is a diagram for describing a method of controlling the electronic device according to the fifth embodiment of the present invention.

The method of controlling the electronic device according to the fifth embodiment of the present invention may be embodied in the electronic device 100 described referring to Figs. 1 and 2. The method of controlling the electronic device according to the fifth embodiment of the present invention and the operation of the electronic device 100 for embodying this method are described below in detail referring to the related drawings.

Referring to Fig. 38, the controller 180 may display information on the touch screen 151 (S500).

The controller 180 may receive a scrolling command corresponding to a specific direction via the touch screen 151 (S510). The controller 180 may scroll through the information in the specific direction according to the received scrolling command (S520).

The controller 180 may determine whether the edge of the information is reached while scrolling through the information in the specific direction according to the received scrolling command (S530).

Steps S500 to S530 are the same as Steps S100 to S130 in the embodiment described above according to the present invention, respectively.

When the edge of the information is reached as a result of a determination in Step S530, the controller 180 may control the touch screen in such a manner that a specific object projects from the edge and then disappears (S540).

For example, when the edge page is reached while scrolling through the information, the controller 180 may control the touch screen 151 in such a manner that the specific object 40 such as a block projects from the edge and then disappears.

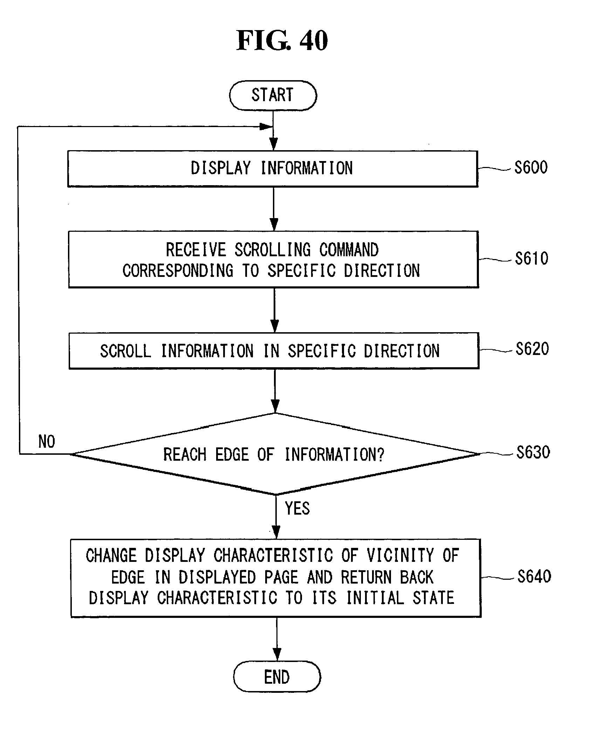

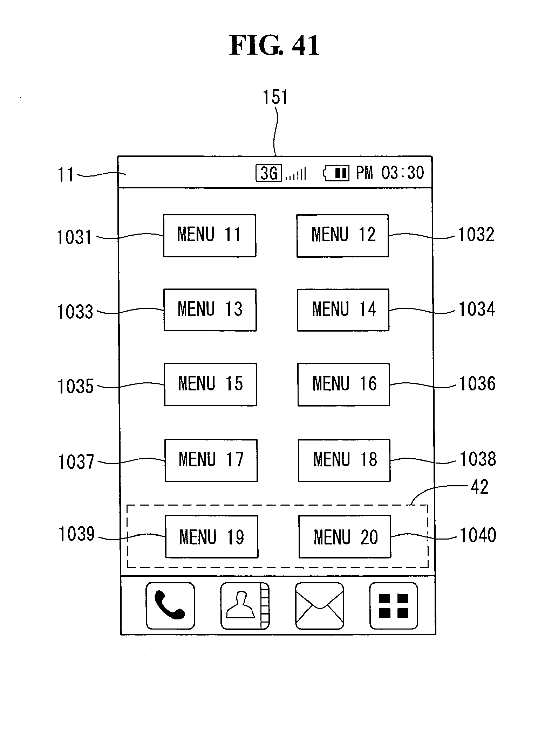

Fig. 40 is a flow chart of a method of controlling the electronic device according to a sixth embodiment of the present invention. Fig 41 is a diagram for describing a method of controlling the electronic device according to the sixth embodiment of the present invention.

The method of controlling the electronic device according to the sixth embodiment of the present invention may be embodied in the electronic device 100 described with reference to Figs 1 and 2. The method of controlling the electronic device according to the sixth embodiment of the present invention and the operation of the electronic device 100 for embodying this method are described below in detail referring to the related drawings.

Referring to Fig. 40, the controller 180 may display information on the touch screen 151 (S600).

The controller 180 may receive a scrolling command corresponding to a specific direction via the touch screen 151 (S610). The controller 180 may scroll through the information in the specific direction according to the received scrolling command (S620).

The controller 180 may determine whether the edge of the information is reached while scrolling through the information in the specific direction according to the received scrolling command (S630).

Steps S600 to S630 are the same as Steps S100 to S130 in the embodiment described above according to the present invention, respectively.

When the edge of the information is reached as a result of a determination in Step S630, the controller 180 may change a display characteristic of the vicinity of the edge in the page displayed on the touch screen 151, and then may return the changed display characteristic back to its initial characteristic (S640).

For example, when the edge page is reached while scrolling through the information, the controller 180 may change the display characteristic of an area 42 adjacent to the edge and then may return the changed display characteristic back to its initial display characteristic, as illustrated in Fig. 41. The display characteristic may include brightness, density, saturation and the like.

The above-described method of controlling the electronic device may be written as computer programs and may be implemented in digital microprocessors that execute the programs using a computer readable recording medium. The method of controlling the electronic device may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An electronic device comprising:
a touch screen configured to display information of a page; and
a controller configured to:
scroll through the information in a specific direction in response to receiving a scrolling command corresponding to the specific direction via the touch screen, and
control a display of the page such that a depth level, at which at least one part of the page is initially displayed on the touch screen, is changed when an edge of the information is reached while scrolling through the information in the specific direction in response to the reception of the scrolling command.

2. The electronic device according to claim 1,
wherein the depth level, at which the at least one part of the page is initially displayed, is a first depth level corresponding to a two-dimensional plane, and
wherein the controller is further configured to control the display of the page such that a second depth level that is different from the first depth level is used when the edge of the information is reached.

3. The electronic device according to claim 2,
wherein the controller is further configured to display the entire page at the second depth level when the edge of the information is reached.

4. The electronic device according to claim 2,
wherein the controller is further configured to display the at least one part of the page at the second depth level when the edge of the information is reached.

5. The electronic device according to claim 4,
wherein the at least one part of the page includes a part of the page corresponding to the entire edge of the information, or a part of the page corresponding to a part of the edge.

6. The electronic device according to claim 2,
wherein the controller is further configured to determine the second depth level according to a signal strength of the scrolling command.

7. The electronic device according to claim 1,
wherein the touch screen includes a panel for facilitating stereoscopic vision, and
wherein the controller is further configured to:
display the information as a stereoscopic image using binocular disparity on the touch screen, and
control the display of the page such that a first three-dimensional depth level, at which the at least one part of the page is initially displayed, is changed to a second three-dimensional depth level when the edge of the information is reached.

8. The electronic device according to claim 7,
wherein the controller is further configured to display the entire page at the second three-dimensional depth level when the edge of the information is reached, and
wherein the second three-dimensional depth level is different from the first three-dimensional depth level.

9. The electronic device according to claim 7,
wherein the controller is further configured to display the at least one part of the page at the second three-dimensional depth level when the edge of the information is reached, and
wherein the second three-dimensional depth level is different from the first three-dimensional depth level.

10. The electronic device according to claim 9,
wherein the at least one part of the page includes a part of the page corresponding to the entire edge of the information, or a part of the page corresponding to a part of the edge.

11. The electronic device according to claim 7,
wherein the controller is further configured to determine the second three-dimensional depth level according to a signal strength of the scrolling command.

12. A method of controlling an electronic device including a touch screen, the method comprising:
displaying information of a page on the touch screen;
scrolling through the information in a specific direction in response to receiving a scrolling command corresponding to the specific direction via the touch screen; and
controlling a display of the page such that a depth level, at which at least one part of the page is initially displayed on the touch screen, is changed when an edge of the information is reached while scrolling through the information in response to the reception of the scrolling command.

13. The method according to claim 12,
wherein the depth level, at which the at least one part of the page is initially displayed, is a first depth level corresponding to a two-dimensional plane, and
wherein controlling the display of the page includes controlling the display of the page such that a second depth level that is different from the first depth level is used when the edge of the information is reached.

14. The method according to claim 12,
wherein the touch screen includes a panel for facilitating stereoscopic vision,
wherein displaying the information includes displaying the information as a stereoscopic image using binocular disparity on the touch screen, and
wherein controlling the display of the page includes controlling the display of the page such that a first three-dimensional depth level, at which the at least one part of the page is initially displayed, is changed to a second three-dimensional depth level that is different from the first three-dimensional depth level when the edge of the information is reached.
